Europäisches Patentamt

European Patent Office

Office européen des brevets

(19)

(11) Publication number: **0 019 469**
**B1**

(12)

# EUROPEAN PATENT SPECIFICATION

(45) Date of publication of patent specification: **29.02.84**

(21) Application number: **80301596.5**

(22) Date of filing: **16.05.80**

(51) Int. Cl.³: **C 04 B 41/06,**
**C 04 B 43/02, C 03 C 25/02**

(54) Chromium oxide coated fibres, articles made therefrom and method of coating the fibres.

(30) Priority: **21.05.79 US 41033**

(43) Date of publication of application:
**26.11.80 Bulletin 80/24**

(45) Publication of the grant of the patent:
**29.02.84 Bulletin 84/9**

(84) Designated Contracting States:
**BE DE FR GB IT LU NL SE**

(56) References cited:
EP - A - 0 007 485
DE - B - 2 829 413
FR - A - 2 229 665
GB - A - 969 782
GB - A - 1 107 877
GB - A - 1 481 133
US - A - 3 348 994
US - A - 3 585 260

(73) Proprietor: KENNECOTT CORPORATION
Ten Stamford Forum
Stamford Connecticut 06905 (US)

(72) Inventor: Smith, Russell David
192 Gregory Drive
Grand Island New York (US)
Inventor: Tressler, Richard Ernest
R.D. No. 1
Julian, Pennsylvania (US)

(74) Representative: Atkinson, Peter Birch et al,
Marks & Clerk Scottish Life House Bridge Street
Manchester M3 3DP (GB)

Courier Press, Leamington Spa, England.

# Chromium oxide coated fibres, articles made therefrom and method of coating the fibres

This invention concerns high temperature fibres and shrink resistant articles manufactured therefrom.

In the prior art, amorphous or polycrystalline fibres were manufactured either from molten ceramic materials or from materials which would convert to ceramic materials upon the application of sufficient heat. Examples of such fibres are mineral wool manufactured by blowing fibres from molten slag obtained as a byproduct from metal refining, glass wool manufactured by blowing fibres from molten clay, silica and alumina; refined mineral fibres blown from molten iron silicates; ceramic fibres made from molten aluminium silicates; drawn glass fibres manufactured from alkali metal silicates, alkaline earth metal silicates and borosilicates; and spun fibres from inorganic or organic compositions which convert to ceramic fibres upon the application of heat such as solutions of aluminium chlorhydrate.

Of the foregoing fibres, aluminium silicate, silica and alumina-silica fibres are generally considered to have the highest temperature resistance.

Such fibres, however, have disadvantages which have never been completely overcome. In particular, the heat resistance is still not as high as is desired and shrink resistance of fibre articles manufactured from the fibres was not as good as desired.

Numerous approaches have been taken to improve heat resistance and shrink resistance in inorganic fibres at high temperatures. The most common of such approaches has been to incorporate additives into the composition from which the fibres are made. Among such additives, chromium oxide has been used to increase temperature resistance. For example, U.S. Patents 3,007,806 to Hartwig and 3,449,137 to Ekdahl; U.S. Patent 4,125,406 to Sowman and British Patent Specification 495,654 all disclose that chromium oxide can be incorporated into a fusion containing silica and alumina followed by formation of fibres from the fused material.

While the incorporation of the chromium oxide into the fibres results in fibres having higher temperature resistance and improvement in shrink resistance of the fibres when formed into mats or other fibre articles, the process has serious disadvantages. In particular, oxygen is released by the chromium oxide in the melt which creates corrosion problems and results in the presence of chromium metal which creates an unstable fibre product.

U.S. Patent 3,019,117 to Labino discloses that a mass of glass fibres may be dipped into a saturated solution of a metal nitrate such as chromium, iron, nickel or cobalt nitrates followed by drying the fibre mass and subjecting the fibre mass to sufficient pressure and jecting the fibre mass to sufficient pressure and temperature to fuse the fibres. While the resulting fibre block has reasonably good temperature resistance, the flexibility and shrink resistance at elevated temperatures is not as good as desired. This is believed, in accordance with the present invention, to be due to migration of the solution prior to complete drying which results in non-uniform coating of the fibres. U.S. Patent 2,839,424 to Labino discloses that fibres of an alkali silicate could be treated with an acidic salt such as an aqueous solution of calcium, zinc or barium chloride so that the alkaline metal of the chloride replaces at least a portion of the alkali metal in the fibre followed by heating to drive off water and treating the resulting fibres with a solution such as chromic anhydride to fill the resulting pores in the fibre with chromic oxide upon heating to a sufficient temperature. The resulting fibre is characterised by pockets of chromic oxide and according to the patent, is resistant to temperatures in excess of 1200°C (2200°F) and, under certain circumstances, when the fibres are completely covered, i.e., encased, with chromic oxide, will resist temperatures of about 1600°C (3000°F) without deformation. It is to be noted that the process for treating the fibres is complex utilising at least two liquid treatment steps and numerous drying and heating steps. It is to be further noted that the only specific teachings with respect to a method for obtaining complete coverage of the fibre with chromium oxide is by incorporating the fibre into a refractory brick structure containing between about 6 to about 16 percent of temperature-resistant oxides such as chromium oxide by weight of product. Such a brick structure is not flexible. Additionally, the fibres discussed in U.S. Patent 2,839,424 are fibres of an alkali silicate which is a substance suitable for utilisation in accordance with the process of the Labino patent but which is highly undesirable if resistance to humidity and chemical action is to be obtained.

French Patent Specification No. 2 229 665 describes refractory fibres comprising 41 to 53% alumina and 42 to 47% silica and coated with 8 to 17% by weight of $Cr_2O_3$ based on the weight of the uncoated fibre. The coating is produced by treating the fibre with a solution of aqueous chromic anhydride, i.e. $CrO_3$ (chromic acid), followed by a heat treatment to convert $CrO_3$ to $Cr_2O_3$. This method of producing the fibres will result in a non-uniform coating of $Cr_2O_3$ due to solution migration as discussed above. The coated fibres are intended for use in sprues (i.e. compositions for exposure to molten metal) and as such do not have to be flexible.

A process for providing a coating of $Cr_2O_3$ on a refractory fibre consisting of silica of more than 90% purity is described in GB—A—969,782. According to this prior British patent the fibre is firstly treated with acid to leach out impurities then contacted with a solution of chromium acetate, treated with an ammonia solution, dried and then heated to form a coating of $Cr_2O_3$. The acid pre-treatment will however cause voids in the fibre surface which fill with chromium oxide thus causing a varying (i.e. non-uniform) thickness of chromium oxide coating.

In accordance with the invention there is provided a flexible shrink resistant ceramic fibre article comprising ceramic fibres which comprise at least 80 weight percent of a refractory compound selected from the group consisting of alumina and aluminium silicate, said fibres comprising from 40 to 100 weight percent alumina from 0 to 60 weight percent silica, and less than 5 combined weight percent of an alkali or alkaline earth metal oxide or alkali or alkaline earth metal silicate, and said fibres being uniformly coated with from 0.01 to 5 weight percent of $Cr_2O_3$ by weight of the uncoated fibre. Alkali metals include lithium, sodium and potassium. Alkaline earth metals include barium, calcium and magnesium.

The invention also comprises the ceramic fibre uniformly coated from 0.01 to 5 weight percent of $Cr_2O_3$ by weight of the uncoated fibre from which the shrink resistant ceramic fibre article such as a mat is manufactured. Preferably the uncoated ceramic fibre comprises at least 90 and most preferably at least 95 weight percent of the refractory compound.

The present invention also provides a method for uniformly coating a ceramic fibre which comprises at least 80 weight percent of a refractory compound selected from the group consisting of alumina and aluminium silicate, said fibres comprising from 40 to 100 weight percent of alumina, from 0 to 60 percent silica and less than 5 combined weight percent of an alkali or alkaline earth metal oxide or alkali or alkaline earth metal silicate, the method comprising spraying a sufficient amount of a solution containing from 0.1 to 20 weight percent chromium ion upon the fibre at a fibre temperature between 350°C and the melting temperature of the fibre to provide a uniform coating of from 0.01 to 5 percent of $Cr_2O_3$ by weight of the uncoated fibre. The temperature at which the solution is applied is sufficient to immediately vaporise the water and from a uniform chromium containing compound on the fibre surface which calcines to form a $Cr_2O_3$ coated ceramic fibre.

A further method for providing a coated ceramic fibre in accordance with the invention comprises precipitating $Cr_2O_3.xH_2O$ upon a fibre of the desired composition followed by converting the precipitated $Cr_2O_3.xH_2O$ to $Cr_2O_3$.

One example of such a method comprises contacting the fibre with a solution containing from about 0.1 to about 20 weight percent of chromium ion; raising the pH of the solution to above about 9.5 while the fibre is in contact with the solution to precipitate a chromium oxide hydrate upon the fibre; removing the fibre from the solution; vaporising the remaining free water from the fibre and heating the fibre to from about 200 to about 1200°C to convert the chromium oxide hydrate to chromium oxide.

Another method for uniformly coating the ceramic fibres with $Cr_2O_3$ comprises the above method wherein the pH is not upwardly adjusted but the solution contains urea or another compound which thermally decomposes to produce ammonia or other basic compound. Alternatively, the pH of the chromium ion solution may be adjusted with ammonium hydroxide or other basic compound so that the adjusted pH is slightly less than that required to precipitate the hydrous chromium compound. Upon exposure to heat, water evaporation produces a higher pH solution in which the hydrous chromium compound precipitates.

"Ceramic" as used herein means an inorganic compound having a decomposition or softening point above 1100°C. "Ceramic fibres" as used herein, means synthetic inorganic fibres which, both before and after treatment in accordance with the present invention have a decomposition temperature or softening point greater than 1100°C and preferably greater than 1500° C and a continuous maximum operating temperature greater than 1000°C and preferably greater than 1300°C.

The ceramic fibres with which this invention is concerned, are glass or microcrystalline fibres having diameters of less than 20 $\mu$m. Glass fibres are defined herein as fibres having no true crystalline structure; i.e., amorphous fibres, and microcrystalline fibres are defined herein as fibres comprising true crystals which, on the average, have a size of less than one-fourth of the diameter of the fibre.

The fibre for use in accordance with the present invention is a fibre which contains from about 40 to 100, preferably from 45 to 65 and most preferably 45 to 55 weight percent aluminium oxide with between 0 and 60 and preferably from 35 to 55 weight percent silica. Other compounds such as magnesia, iron oxide and ceramic oxides and silicates may be used provided that greater than 5 weight percent of combined alkali and alkaline metal oxides and alkali and alkaline metal silicates are not present since these compounds reduce maximum operating temperatures. Also, generally purer materials (e.g. purified silica and alumina) are frequently desirable. The most preferred fibre contains at least 90% of combined $Al_2O_3$ and $SiO_2$ which are usually at least partially combined with each other in the form of mullite.

In accordance with the invention, the fibre is uniformly coated with from 0.01 to 5 weight percent and usually 0.1 to 0.8 weight percent of chromium oxide (chromia, $Cr_2O_3$) which both raises heat resistance of the fibre and unexpectedly permits the formation of shrink resistant mats, blankets and other particles to be formed from the fibres.

"Uniformly Coated", as used herein, means that chromium oxide on the coated fibres is uniformly distributed along the length of the fibre in the form of substantially equally spaced particles or crystals without chemically removing portions of the fibre surface.

There are two major methods for accomplishing a uniform coating of $Cr_2O_3$ upon the fibre. The first method comprises precipitating chromium oxide hydrate ($Cr_2O_3.xH_2O$) upon the fibres by means of a change in pH of a chromium ion solution followed by conversion to $Cr_2O_3$ and the second method comprises spraying the fibre at an elevated temperature with an aqueous chromium ion solution to very rapidly vaporise the water, leaving a uniform deposit of $Cr_2O_3$.

In the first method, an aqueous solution containing from about 0.1 to about 7 weight percent of chromium ion is treated with a base to raise its pH to above about 9.5 in the presence of the fibre to be treated thus precipitating chromic oxide hydrate upon the fibre. The chromium ion is provided by any suitable water soluble salt such as chromium nitrate or chromium acetate. The base used to raise the pH may be any suitable base such as ammonium hydroxide or sodium hydroxide or may be a compound which will thermally decompose to a compound which will provide hydroxy ions upon heating of the solution. An example of such a compound is urea which thermally decomposes to form $NH_3$ which in water forms $NH_4OH$.

Alternatively, the pH of the solution may be raised to a level below 9.5, but above about 8 and the solution concentrated by evaporation thus raising the pH to above about 9.5 to precipitate $Cr_2O_3.xH_2O$ upon the fibres.

After precipitation of $Cr_2O_3.xH_2O$ the $Cr_2O_3.xH_2O$ is converted to $Cr_2O_3$ by heating from about 200°C to about 1200°C for a sufficient time to remove both free water and water of hydration leaving a uniform chromic oxide coating on the surface of the fibre. The time for conversion is dependent upon the conversion temperature which may be from 0.5 to 2 hours at 200°C and from 1 minute to one second at 1200°C depending upon the quantity of free water on the fibre, the initial temperature of the free water, the initial temperature of the fibre and $Cr_2O_3$, the quantity of $Cr_2O_3$, the circulation and transfer of heat and the number of fibres per unit heating area. The time usually is between 2.5 and 35 minutes at about 700°C depending upon mat thicknesses varying between 0.5 and 5 centimeters and densities varying between 0.06 and 0.13 grams per $cm^3$.

In the second method, a chromium ion solution similar to the solution previously described, prior to precipitation of chromium oxide hydrate, is sprayed in the form of very fine droplets or mist upon the fibre; e.g., in droplet or particle diameter of from between molecular size to ten times the diameter of the fibre. The chromium ion solution contains from 0.1 to 20 weight percent, preferably 0.1 to 7 weight percent, chromium ion. The droplets may be initially somewhat larger but become smaller as they approach the fibre due to vaporisation. The temperature of the fibre struck by the droplets or mist is generally from the melting temperature of the fibre down to 350°C and in the case of alumina-silica fibres when the solution is applied at the time of blowing is usually from 1500°C to 1750°C.

The fibres, uniformly coated with $Cr_2O_3$ in accordance with the invention, are characterised in having better heat resistance than uncoated fibres or non-uniformly coated fibres of the same composition and are characterised in that mats and other articles formed from the fibres have better shrink resistance at elevated temperatures than prior art mats or articles formed from uncoated or non-uniformly coated fibres otherwise having the same composition.

As used herein, elevated temperature means above about 0.8T where T is the maximum continuous operating temperature in °C.

It has been further discovered that shrink resistance of articles made from the fibres can be additionally improved by pretreating the fibres at an elevated temperature in addition to coating them with chromium oxide. The heating at an elevated temperature must be for an insufficient time to cause the fibres to become brittle thus making them difficult to handle. Generally the fibre is pretreated at a temperature between about 1150 and about 1350°C for from 1 to about 10 minutes. The higher pretreating temperatures require the shorter times.

Fibre articles or mats made from fibres of the invention are usually manufactured by compressing and needling the fibres to form a three dimensional structure which may be used as it is or cut to a desired final shape.

The invention will be illustrated by reference to the following Examples.

Example 1

A mixture of 48 percent Bayer process alumina and 52 percent high purity silica sand is melted in a furnace. A stream of the molten mixture at about 1850°C is then passed through an orifice at a rate of about 340 kg. per hour. The molten stream is then first impinged by an air stream at sufficient pressure to turn the stream about 90°. The molten stream then passes through a secondary stream of air which impinges the molten stream at sufficient force and volume to form fibres having a diameter of about 3 $\mu$m. About 65 litres per hour of a liquid containing a lubricant is applied to the stream at the primary nozzle to assist needling.

The fibres are then collected on a moving conveyor mesh and compressed and needled to form a 2.5 cm thick mat having a density of eight pounds per cubic foot (about 0.13 grams per $cm^3$). The mat is then heated to oxidise any remaining lubricant.

The resulting mat is then heated to about 1425°C from ambient temperature over a period of about 12 hours and held at that temperature for 7 and 14 days. The mat is found to have a linear shrinkage of 9.35% after 7 days and 10.44% after 14 days.

### Example 2

Example 1 is repeated except an aqueous solution, containing about 1.74 weight percent chromium, provided by dissolving chromium acetate and 4 weight percent lubricant, is substituted for the lubricant solution of Example 1. The resulting mat after heating is uniformly coated with $Cr_2O_3$ and when tested is found to have a linear shrinkage of 7.48% after 7 days and 9.04% after 14 days. The mat is found to have a chromium oxide ($Cr_2O_3$) content of 0.47 weight percent.

### Example 3

Example 2 is repeated except prior to testing, the mat is prefired at about 1200°C for 5 minutes. The resulting mat retains flexibility and is found to have a linear shrinkage of 4.65% after 7 days and 5.72% after 14 days.

### Example 4

Example 2 is repeated except about 86 litres per hour of solution is applied to the fibre. The resulting mat is found to have a $Cr_2O_3$ content of about 0.61 weight percent and a linear shrinkage of about 6.61% after 7 days and 8.10% after 14 days at about 1425°C.

### Example 5.

Example 4 is repeated except prior to testing for shrinkage, the mat is prefired at about 1200°C for 5 minutes. The resulting mat retains flexibility and is found to have a linear shrinkage of about 5.16% after 7 days and about 6.51% after 14 days.

### Example 6

The process of Example 1 is followed except that the fibres are needled and compressed to form a 2.5 cm thick mat having a density of 6 pounds per cubic foot (about 0.1 grams per $cm^3$). The resulting mat is found to have a linear shrinkage of about 6.65% after 9.5 hours at 1425°C.

### Example 7

The mat of Example 6 is saturated with a chromium acetate solution containing 87 grams of chromium acetate per 1000 ml of water. Prior to treatment, the solution was adjusted to a pH of 9.5. The blanket is allowed to drain and is dried at about 170°C which results in a uniform precipitate. After heating at 1425°C for 9.5 hours, the mat is found to have a linear shrinkage of 5.82%.

### Example 8

Example 7 is repeated except the mat is prefired at 1200°C for 5 minutes prior to testing. The resulting mat retains flexibility and after heating at 1425°C for 9.5 hours, the mat is found to have a linear shrinkage of 2.39%.

### Example 9

Example 6 is repeated except kaolin clay fibres are used instead of the alumina and silica. The resulting fibre mat has a linear shrinkage of 11.61% after heating at 1425°C for 9.5 hours.

### Example 10

Example 7 is repeated except kaolin clay fibres are used. The resulting fibre mat has a linear shrinkage of 5.09% after heating at 1425°C for 9.5 hours.

### Example 11

Example 8 is repeated except kaolin clay fibres are used. The resulting fibre mat retains flexibility and has a linear shrinkage of 3.79%.

## Claims

1. A flexible shrink resistant ceramic fibre article comprising ceramic fibres which comprise at least 80 weight percent of a refractory compound selected from the group consisting of alumina and aluminium silicate, said fibres comprising from 40 to 100 weight percent alumina from 0 to 60 weight percent silica, and less than 5 combined weight percent of an alkali or alkaline earth metal oxide or alkali or alkaline earth metal silicate, and said fibres being uniformly coated with from 0.01 to 5 weight percent of $Cr_2O_3$ by weight of uncoated fibre.

2. An article as claimed in claim 1 wherein the fibres are micro-crystalline fibres.

3. An article as claimed in claim 1 or 2 wherein the fibre contains up to 65 weight percent $Al_2O_3$.

4. An article as claimed in any one of claims 1 to 3 which is a fibre mat.

5. A ceramic fibre which comprises at least 80 weight percent of a refractory compound selected from the group consisting of alumina and aluminium silicate, said fibre comprising from 40 to 100 weight percent alumina, from 0 to 60 weight percent silica, and less than 5 combined weight percent of alkali or alkaline earth metal oxide or alkali or alkaline earth metal silicate, and said fibre being uniformly coated with from 0.01 to 5 weight percent of $Cr_2O_3$ by weight of the uncoated fibre.

6. A fibre as claimed in claim 5 wherein said fibre is a micro-crystalline fibre.

7. A method for uniformly coating a ceramic fibre which comprises at least 80 weight percent of a refractory compound selected from the group consisting of alumina and aluminium silicate, said fibres comprising from 40 to 100 weight percent of alumina, from 0 to 60 weight percent silica and less than 5 combined weight percent of an alkali or alkaline earth metal oxide or alkali or alkaline earth metal silicate, the method comprising spraying a sufficient amount of solution containing from 0.1 to 20 weight percent chromium ion upon the fibre at a fibre temperature between 350°C and the melting temperature of the fibre to provide a uniform coating of from 0.01 to 5 percent of $Cr_2O_3$ by weight of the uncoated fibre.

8. A method as claimed in claim 7 wherein the solution contains from 0.1 to 7 weight percent chromium ion.

9. A method as claimed in claim 7 or 8 wherein the fibre is formed from a composition comprising at least 90 weight percent of a mixture of alumina and silica and the fibre temperature at the time of spraying is from 1500 to 1750°C.

10. A method as claimed in claim 9 wherein the fibres comprise from 45 to 65 weight percent alumina and from 35 to 55 weight percent silica.

11. A method as claimed in claim 10 wherein the fibres comprise from 45 to 55 weight percent alumina and from 45 to 55 weight percent silica.

## Revendications

1. Article flexible en fibres céramiques résistant au retrait, comprenant des fibres céramiques qui renferment au moins 80% en poids d'un composé réfractaire choisi dans le groupe constitué par l'alumine et le silicate d'aluminium, lesdites fibres comprenant 40 à 100% en poids d'alumine, 0 à 60% en poids de silice et moins de 5% en poids au total d'un oxyde de métal alcalin ou alcalino-terreux ou d'un silicate de métal alcalin ou alcalino-terreux, et lesdites fibres étant uniformément revêtues avec 0,01 à 5% en poids de $Cr_2O_3$ par rapport au poids de la fibre non revêtue.

2. Article suivant la revendication 1, dans lequel les fibres sont des fibres microcristallines.

3. Article suivant la revendication 1 ou 2, dans lequel la fibre contient jusqu'à 65% en poids de $Al_2O_3$.

4. Article suivant l'une quelconque des revendications 1 à 3, qui est un mat de fibres.

5. Fibre céramique comprenant au moins 80% en poids d'un composé réfractaire choisi dans le groupe formé de l'alimine et du silicate d'aluminium, ladite fibre comprenant 40 à 100% en poids d'alumine, 0 à 60% en poids de silice et moins de 5% poids total d'oxyde de métal alcalin ou alcalino-terreux ou de silicate de métal alcalin ou alcalino-terreux, ladite fibre étant uniformément revêtue de 0,01 à 5% en poids de $Cr_2O_3$ par rapport au poids de la fibre non revêtue.

6. Fibre suivant la revendication 5, qui est une fibre microcristalline.

7. Procédé pour revêtir uniformément une fibre céramique qui comprend au moins 80% en poids d'un composé réfractaire choisi dans le groupe formé de l'alumine et du silicate d'aluminium, lesdites fibres comprenant 40 à 100% en poids d'alumine, 0 à 60% en poids de silice et moins de 5% en poids total d'un oxyde de métal alcalin ou alcalino-terreux ou d'un silicate de métal alcalin ou alcalino-terreux, procédé consistant à appliquer par pulvérisation une quantité suffisante de solution contenant 0,1 à 20% en poids d'ion chrome sur la fibre à une température de la fibre comprise entre 350°C et le point de fusion de la fibre pour obtenir un revêtement uniforme de 0,01 à 5% de $Cr_2O_3$ par rapport au pods de la fibre non revêtue.

8. Procédé suivant la revendication 7, dans lequel la solution contient 0,1 à 7% en poids d'ion chrome.

9. Procédé suivant la revendication 7 ou 8, dans lequel la fibre est formée d'une composition comprenant au moins 90% en poids d'un mélange d'alumine et de silice et la température de la fibre au moment de l'application par pulvérisation va de 1500 à 1750°C.

10. Procédé suivant la revendication 9, dans lequel les fibres comprennent 45 à 65% en poids d'alumine et 35 à 55% en poids de silice.

11. Procédé suivant la revendication 10, dans lequel les fibres comprennent 45 à 55% en poids d'alumine et 45 à 55% en poids de silice.

## Patentansprüche

1. Schrumpffesterflexibler Gegenstand aus Keramikfasern mit einem Gehalt an Keramikfasern, die mindestens 80 Gew.-% einer feuerfesten Verbindung ausgewählt aus der Gruppe von Aluminiumoxid und Aluminiumsilicat enthalten, wobei die Fasern 40 bis 100 Gew.-% Aluminiumoxid, 0 bis 60 Gew.-% Siliciumdioxid und weniger als 5 kombinierte Gew.-% eines Alkali- oder Erdalkalimetalloxids oder Alkali- oder Erdalkalimetallsilicats enhalten und die Fasern gleichmäßig mit 0.01 bis 5 Gew.-% $Cr_2O_3$ bezogen auf das Gewicht der nicht beschichteten Faser beschichtet sind.

2. Gegenstand nach Anspruch 1, in dem die Fasern mikrokristalline Fasern sind.

3. Gegenstand nach Anspruch 1 oder 2, in dem die Faser bis zu 65 Gew.-% $Al_2O_3$ enthält.

4. Gegenstand nach einem der Ansprüche 1 bis 3, bei dem es sich um eine Fasermatte handelt.

5. Keramikfaser, enthaltend mindestens 80 Gew.-% einer feuerfesten Verbindung, ausgewählt aus der Gruppe von Aluminiumoxid und Aluminiumsilicat, wobei die Faser 40 bis 100 Gew.-% Aluminiumoxid, 0 bis 60 Gew.-% Siliciumdioxid und weniger als 5 kombinierte Gew.-% Alkali-oder Erdalkalimetalloxid oder Alkali- oder Erdalkalimetallsilicat enthält und die Faser gleichmäßig mit 0,01 bis 5 Gew.-% $Cr_2O_3$ bezogen auf das Gewicht der nicht beschichteten Faser beschichtet ist.

6. Faser nach Anspruch 5, in der die Faser eine mikrokristalline Faser ist.

7. Verfahren zur gleichmäßigen Beschichtung einer Keramikfaser, die mindestens 80 Gew.-% einer feuerfesten Verbindung ausgewählt aus der Gruppe von Aluminiumoxid und Aluminiumsilicat enthält, wobei die Fasern 40 bis 100 Gew.-% Aluminiumoxid, 0 bis 60 Gew.-% Siliciumdioxid und weniger als 5 kombinierte Gew.-% eines Alkali-oder Erdalkalimetalloxids oder Alkali-oder Erdalkalimetallsilicats enthalten, wobei das Verfahren darin besteht, eine ausreichende Menge einer Lösung, die 0,1 bis 20 Gew.-% Chromion enthält, auf die Faser bei einer Fasertemperatur zwischen 350°C und der Schmelztemperatur der Faser zu sprühen unter Bildung einer gleichmäßigen Beschichtung von 0,01 bis 5 Gew.-% Cr₂O₃ bezogen auf das Gewicht der nicht beschichteten Faser.

8. Verfahren nach Anspruch 7, bei dem die Lösung 0,1 bis 7 Gew.-% Chromion enthält.

9. Verfahren nach Anspruch 7 oder 8, bei dem die Faser aus einer Zusammensetzung gebildet ist, die mindestens 90 Gew.-% eines Gemischs von Aluminiumoxid und Siliciumdioxid enthält und die Fasertemperatur zum Sprühzeitpunkt 1500 bis 1750°C beträgt.

10. Verfahren nach Anspruch 9, bei dem die Fasern 45 bis 65 Gew.-% Aluminiumoxid und 35 bis 55 Gew.-% Siliciumdioxid enthalten.

11. Verfahren nach Anspruch 10, bei dem die Fasern 45 bis 55 Gew.-% Aluminiumoxid und 45 bis 55 Gew.-% Siliciumdioxid enthalten.